# NEUE EUROPÄISCHE PATENTSCHRIFT

(11) **EP 2 117 909 B2**
(45) Veröffentlichungstag und Bekanntmachung des Hinweises auf die Entscheidung über den Einspruch: **01.04.2020**
(45) Hinweis auf die Patenterteilung: 05.07.2017
(21) Anmeldenummer: 07858075.0
(22) Anmeldetag: 21.12.2007
(51) Int. Cl.: B62D 29/00

(54) **VERSTÄRKUNGSSYSTEM ZUR VERSTÄRKUNG EINES HOHLRAUMES EINES BAUELEMENTS**
REINFORCING SYSTEM FOR REINFORCING A CAVITY OF A STRUCTURAL ELEMENT
SYSTÈME DE RENFORCEMENT POUR RENFORCER UNE CAVITÉ D'UN ÉLÉMENT DE CONSTRUCTION

(30) Priorität: 22.12.2006 EP 06127083
(43) Veröffentlichungstag der Anmeldung: 18.11.2009
(60) Teilanmeldung: 17172568.2
(73) Patentinhaber: Sika Technology AG, 6340 Baar (CH)
(72) Erfinder: BLANK, Norman, CH-8803 Rüschlikon (CH); FINTER, Jürgen, CH-8037 Zürich (CH); BELPAIRE, Vincent, B-1180 Brussel (BE)
(74) Vertreter: Sika Patent Attorneys
(86) Internationale Anmeldenummer: PCT/EP2007/064464
(87) Internationale Veröffentlichungsnummer: WO 2008/077944

(56) Entgegenhaltungen:
- WO-A1-01/96170
- WO-A1-03/061934
- WO-A1-2004/078451
- WO-A1-2004/113153
- WO-A1-2005/090455
- WO-A1-2006/094042
- WO-A2-03/092977
- WO-A2-2004/076769
- CA-A1- 2 135 335
- DE-A1- 10 017 783
- DE-A1- 10 148 770
- DE-A1- 19 904 630
- DE-U1- 20 013 208
- JP-A- S5 977 973
- JP-A- S6 469 308
- JP-A- H02 303 575
- JP-A- H04 310 477
- JP-A- H05 294 258
- JP-A- S61 116 509
- JP-A- 2000 158 471
- US-A- 4 610 836
- US-A- 5 575 526
- US-A- 5 968 995
- US-A- 6 159 414
- US-A1- 2004 105 949
- US-A1- 2004 131 839
- US-A1- 2005 230 027
- US-B1- 6 272 809
- Carlson D. et al: "Light ight Localized Structural Reinforcements for Structural and NVH Applications", SAE Technical papel series No. 2003-01-1573, 3 May 2003 (2003-05-03), XP055479234,

## Beschreibung

### Stand der Technik

Die Erfindung geht aus von einem Verfahren zur Verstärkung eines Hohlraumes eines Bauelementes nach dem Oberbegriff des unabhängigen Verfahrensanspruches.

Vielfach weisen Bauelemente Hohlräume auf, insbesondere um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das leichtes Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmäßige Form oder ein enges Ausmaß auf, wodurch es erschwert wird, sie richtig abzudichten, zu verstärken und zu dämpfen.

Insbesondere um das mechanische Verhalten von Fahrzeugstrukturen, im folgenden auch Karosserie genannt, zu verbessern, wie z.B. die Crash-Performance, die Steifigkeit, eine verbesserte Vibrationsdämpfung, usw., ist es bekannt lokale Verstärkungsstrukturen in die Fahrzeugstruktur einzubauen. Diese lokalen Verstärkungsstrukturen bestehen beispielsweise aus Metall wie Aluminium oder Stahl, Kunststoff, Strukturschäumen oder Kombinationen dieser Werkstoffe. Diese Verstärkungsstrukturen werden in der Fahrzeugstruktur positioniert und mit dieser verbunden. Metallische Verstärkungsstrukturen können z.B. mittels Schweissen mit der Fahrzeugstruktur verbunden werden, dies ist jedoch nicht immer möglich und ermöglicht nicht immer eine gute Verstärkung. Auch die Verbindung mittels eines Strukturschaumes ergibt nicht immer die gewünschten Ergebnisse. Dies einerseits da die Strukturschaumschicht relativ dick ist und andererseits bedingt durch die mittelmässigen mechanischen Eigenschaften dieser Strukturschäume, insbesondere wegen der Scherfestigkeit, der Haftung und dem ungenügenden Verhalten bei hohen Temperaturen. Solche vorgenannte Verstärkungsstrukturen sind beispielsweise aus des gattungsgemäßen DE 101 48 770 A und der DE 199 04 630 A bekannt.

### Darstellung der Erfindung

Der Erfindung liegt die Aufgabe zugrunde, bei einem Verstärkungssystem der eingangs genannten Art die nachteile des Standes der Technik zu vermeiden und ein verbessertes Verstärkungssystem zur Verfügung zu stellen. Erfindungsgemäss wird dies durch die Merkmale des ersten Anspruches erreicht.

Kern der Erfindung ist es also, dass das Trägerelement Kanäle aufweist, dass im Hohlraum zwischen dem Trägerelement und dem Bauelement ein Klebstoff angeordnet ist, und dass der Klebstoff mittels der Kanäle in den Hohlraum zwischen dem Trägerelement und dem Bauelement einbringbar ist.

Die Vorteile der Erfindung sind unter anderem darin zu sehen, dass
der nachträglich eingespritzte Klebstoff den gewünschten Bedingungen beim Herstellungsprozess des Bauelementes beliebig angepasst werden kann. Ein solches Verstärkungssystem weist deshalb viel bessere Eigenschaften auf, als bisherige Systeme mit schäumbaren Materialien. So können beispielsweise die gewünschten mechanischen Eigenschaften gezielt ausgewählt werden, was bei schäumbaren Materialien nur bedingt möglich ist. Auch die Eigenschaften bei hohen Temperaturen sind mit einem nachträglich eingespritzten Klebstoff viel besser einstellbar. Weiter gibt es keine Alterungsprobleme, Verlust der Eigenschaften beim Transport, Lagerung oder beim Einbau. Weiter eignet sich das hier gezeigte System hervorragend für Reparaturlösungen, welche zusätzlich die gleichen Eigenschaften aufweisen wie die original eingebauten Teile. Bei einem bestehenden Trägerteil kann zudem auch nachträglich noch Klebstoff eingebracht werden, so dass Teile, die eventuell nicht richtig halten, neu befestigt werden können.

Weitere vorteilhafte Ausgestaltungen der Erfindung ergeben sich aus den Unteransprüchen.

### Kurze Beschreibung der Zeichnung

Im folgenden werden anhand der Zeichnungen Ausführungsbeispiele der Erfindung näher erläutert. Gleiche oder gleichwirkende Elemente sind in den verschiedenen Figuren mit den gleichen Bezugszeichen versehen. Die Strömungsrichtung der Medien ist mit Pfeilen angegeben.

Es zeigen:
Fig. 1 : einen Querschnitt durch ein Verstärkungselement nach dem Stand der Technik;
Fig. 2A : einen Querschnitt durch ein erfindungsgemäss hergestelltes Verstärkungselement;
Fig. 2B : einen Querschnitt durch ein weiteres erfindungsgemäss hergestelltes Verstärkungselement;
Fig. 2C : einen Querschnitt durch ein weiteres erfindungsgemäss hergestelltes Verstärkungselement;
Fig. 3A : eine Draufsicht auf ein erfindungsgemäss hergestelltes Verstärkungselement;
Fig. 3B : eine Draufsicht auf das erfindungsgemäss hergestellte Verstärkungselement aus Fig. 3A mit Darstellung der innenliegenden Kanäle;
Fig. 4 : eine Draufsicht auf ein weiteres erfindungsgemäss hergestelltes Verstärkungselement;
Fig. 5 : eine schematische Darstellung des Klebstoff-Füllprozess.

Es sind nur die für das unmittelbare Verständnis der Erfindung wesentlichen Elemente gezeigt.

### Weg zur Ausführung der Erfindung

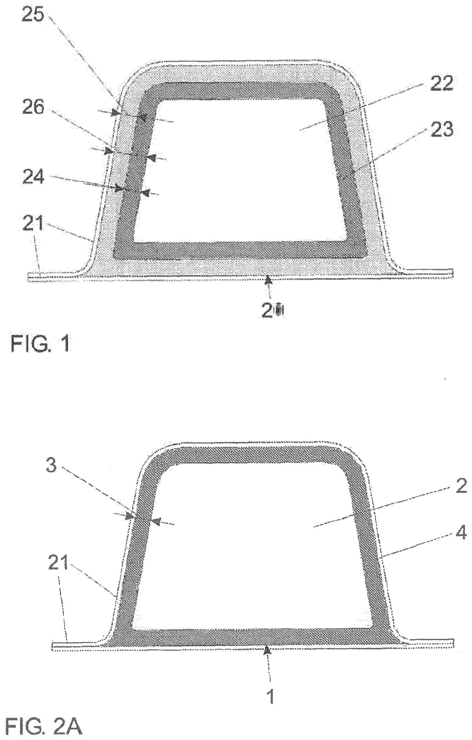

In Fig. 1 ist ein bekanntes Verstärkungselement 20 dargestellt. Dieses ist in einem Hohlraum einer Karosserie 21 eines Fahrzeuges angeordnet, hier handelt es sich um eine Säule der Karosserie. Es versteht sich von selbst, dass ein solches Verstärkungselement in jeglichem Hohlraum der Karosserie angeordnet werden kann. Das Verstärkungselement 20 umfasst ein Trägerteil 22 und ein Teil 23 aus einem schäumbaren Material. Solche schäumbaren Materialien schäumen bevorzugt unter Einfluss von Wärme auf. Ein bevorzugtes thermisch schäumbares Material wird z.B. unter dem Markennamen SikaBaffle® 240, oder 250 oder 255 vertrieben und ist in den US Patenten 5,266,133 und 5,373,027 beschrieben, deren Offenbarung hiermit eingeschlossen ist. Alternativ kann das thermisch expandierende Material auch Verstärkungseigenschaften haben, solches Material wird z.B. unter dem Markennamen SikaReinforcer® 941 vertrieben, und ist im US Patent 6,387,470 beschrieben, dessen Offenbarung hiermit eingeschlossen ist. Natürlich können auch andere schäumbare Materialien verwendet werden, diese können durch externe Wärmequellen oder interne Wärmequellen, z.B. durch eine exotherme Reaktion aktiviert werden. Das Verstärkungselement 20 wird in dem Hohlraum der Karosserie befestigt, üblicherweise mittels eines Befestigungselementes, es kann jedoch auch anders befestigt werden. Der Trägerteil 22 besteht üblicherweise aus Polyamid, kann aber auch aus anderen Materialien oder Materialkomponenten hergestellt werden, insbesondere auch aus Metall.

Das schäumbare Material weist im ungeschäumten Zustand eine Dicke 24 auf und einen Abstand 25 zur Karosserie. Dieser Abstand 25 ist nötig, um die Karosserie im Tauchbad beschichten zu können und um eine genügende Toleranz für den Einbau des Verstärkungsteiles 20 zu haben. Nach dem Schäumen füllt das geschäumte Material den gesamten Hohlraum aus und hat dann eine Dicke 26, welche der Dicke 24 des ungeschäumten Materials plus dem Abstand 25 zur Karosserie entspricht, die Dicke 26 beträgt üblicherweise ungefähr 6 bis 10 mm. Diese relativ grosse Dicke 26 und der Strukturschaum ergeben die Nachteile der bisher verwendeten Systeme.

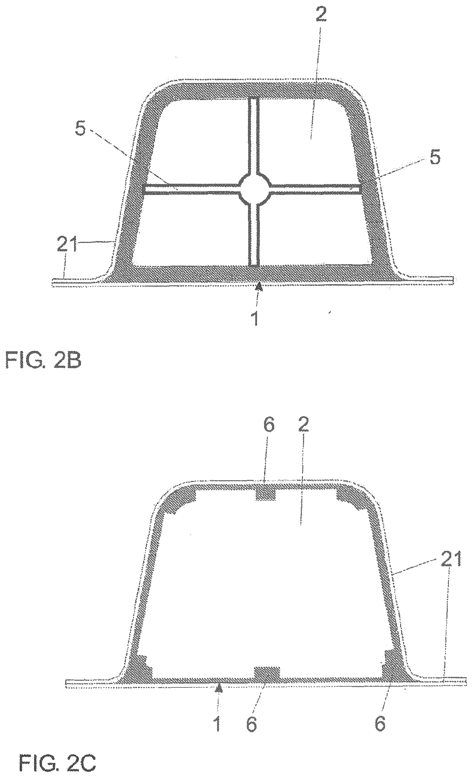

In den Figuren 2A, 2B und 2C sind nun erfindungsgemäss hergestellte Verstärkungselemente 1 dargestellt. Jedes Verstärkungselement 1 umfasst ein Trägerteil 2. Der Abstand 3 zwischen Trägerteil 2 und Karosserie 21 ist hier viel geringer im Vergleich zum Abstand 26 aus Figur 1. Der Abstand 3 kann hier auf den Abstand reduziert werden, welcher nötig ist um die Karosserie im Tauchbad beschichten zu können und um eine genügende Toleranz für den Einbau des Verstärkungsteiles 1 zu haben, üblicherweise sind dies etwa 3 bis 5 mm. Da durch das Trägerteil Kanäle für die Beschichtung im Tauchbad angeordnet werden können, kann der Abstand 3 sogar noch weiter reduziert werden auf die für den Einbau benötigte Toleranz, erhöht um 1 bis 2 mm welche für das Bindematerial benötig wird, so dass der Gesamtabstand auf ungefähr 2 bis 4 mm reduziert werden kann.

Das Trägerteil 2 wird nun mit einem Klebstoff 4 mit der Karosserie verbunden. Dieser Klebstoff 4 wird nach dem Einbau des Trägerteiles 2 nachträglich eingespritzt, wozu das Trägerteil spezielle innenliegende Kanäle 5, z.B. rohrförmig, oder aussenliegende Kanäle 6, oder nicht dargestellt eine Kombination von innenliegenden und aussenliegenden Kanälen aufweisen kann. Der nachträglich eingespritzte Klebstoff kann den gewünschten Bedingungen angepasst werden und weist deshalb viel bessere Eigenschaften auf, als bisherige schäumbare Materialien. So können beispielsweise die gewünschten mechanischen Eigenschaften gezielt ausgewählt werden, was bei schäumbaren Materialien nur bedingt möglich ist. Auch die Eigenschaften bei hohen Temperaturen sind mit einem nachträglich eingespritzten Klebstoff viel besser einstellbar. Weiter gibt es keine Alterungsprobleme, Verlust der Eigenschaften beim Transport, Lagerung oder beim Einbau. Weiter eignet sich das hier gezeigte System hervorragend für Reparaturlösungen, welche zusätzlich die gleichen Eigenschaften aufweisen wie die original eingebauten Teile. Bei einem bestehenden Trägerteil kann zudem auch nachträglich noch Klebstoff eingebracht werden, so dass Teile, die eventuell nicht richtig halten, neu befestigt werden können.

Das Trägerteil kann aus beliebigen Materialien hergestellt werden, beispielsweise aus einem Kunststoff wie Polyurethanschaum, welcher mit Fasern oder Kugeln verstärkt sein kann, Polyamid, usw. oder Metall wie Aluminium, geschäumtem Aluminium, Stahl, usw. oder einer Kombination dieser Materialien.

Für den Reaktionsklebstoff können verschiedenste Systeme zur Anwendung gelangen. Ein wesentlicher Punkt der hier vorliegenden Erfindung ist jedoch, dass der reaktive Klebstoff entsprechend der weiter im Prozess auftretenden Temperaturen so gewählt werden kann, dass eine ausreichend schnelle Aushärtung zu den gewünschten mechanischen Eigenschaften erfolgt. Durchläuft das Teil beispielsweise einen normalen Lacktrocknungsofen bei Temperaturen von 165 - 180°C für etwa 30 Minuten, so können übliche strukturelle 1 K Strukturkleber auf Epoxidbasis eingesetzt werden. Bei tieferen Härtungstemperaturen werden bevorzugt zweikomponentige Systeme eingesetzt. Dabei können durch die vorliegende Erfindung jeweils Klebstoffe ausgewählt werden, welche genau dem vom Hersteller gewünschten Bedingungen entsprechen. Will der Hersteller beispielsweise bei Raumtemperatur die Verstärkungsteile einbauen, ist die ohne Probleme möglich. Auch kann die Art des Klebstoffes ohne Änderung des Trägerteils sofort vor Ort geänderten Herstellungsbedingungen angepasst werden. Soll beispielsweise nun das Verstärkungsteil bei höheren Temperaturen eingebaut werden, um beispielsweise den Herstellungsprozess zu vereinfachen, wird einfach ein Klebstoff verwendet, welcher bei der entsprechenden Temperatur aushärtet.

In der Tabelle 1 sind typische Daten eines herkömmlich verwendeten Schaums zu einem nach der Erfindung zu verwendenden Klebstoff gegenübergestellt. Diese Daten stellen nur bevorzugte Bereiche dar und es können natürlich auch Klebstoffe mit anderen Eigenschaften verwendet werden. Die nach der Erfindung zu verwendenden Klebstoffe können natürlich auch gefüllt sein, beispielsweise mit Verstärkungsmaterialien wie Fasern. Um Schrumpfen und Spannungen beim Aushärten zu vermeiden, weist der erfindungsgemässe Klebstoff vorzugsweise eine Volumen-Ausdehnung von 0 bis 10%, insbesondere 0 bis 5% auf.

**Tabelle 1**

| | **Herkömmlicher Schaum** | **Klebstoff nach der Erfindung** |
|---|---|---|
| **Ausdehnung** | 40% - 200% | 0 - 5% |
| **Kompressionsmodul** | 200 - 750 MPa | 1000 - 4000 MPa |
| **Max Druckspannung** | 5 - 20 MPa | - |
| **Zugmodul** | 400 - 1500 MPa | 1000 - 4000 MPa |
| **Max Zugspannung** | 2 - 10 Mpa | 20 - 50 MPa |
| **Max Scherspannung** | 2 - 8 Mpa | 15 - 30 MPa |

Im Folgenden werden reaktive Klebstoffe gezeigt, welche für die Erfindung verwendet werden können. Natürlich können auch andere Klebstoffe zur Anwendung gelangen, wenn sie die geforderten Eigenschaften aufweisen.

### Beispiele für reaktive Klebstoffe: Einkomponentige Systeme

Bei einem für die Erfindung verwendbaren einkomponentigen Reaktionsklebstoff handelt es sich um eine lagerstabile Polymerzusammensetzung, welche dadurch gekennzeichnet ist, dass sie mindestens ein Polyreaktionen eingehendes Harz **A,** mindestens einen, insbesondere blockierten, Härter **B,** mindestens ein Additiv **D,** sowie optional weitere Komponenten enthält, wobei bevorzugt mindestens eine der Komponenten **A** oder **B** in blockierter Form vorliegt.

In einer ersten Ausführungsform ist der einkomponentige Reaktionsklebstoff eine Polyurethanzusammensetzung. Diese ist dadurch gekennzeichnet, dass sie als Polyreaktionen eingehendes Harz **A** ein freie oder blockierte Isocyanatgruppen enthaltendes Polyurethanpolymer enthält. Mit dem Begriff "Polymer" wird im vorliegenden Dokument einerseits ein Kollektiv von chemisch einheitlichen, sich aber in Bezug auf Polymerisationsgrad, Molmasse und Kettenlänge unterscheidenden Makromolekülen bezeichnet, das durch eine Polyreaktion (Polymerisation, Polyaddition, Polykondensation) hergestellt wurde. Andererseits umfasst der Begriff "Polymer" in diesem Dokument auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können.

Mit dem Begriff "Polymerzusammensetzung" wird im vorliegenden Dokument eine homogene oder heterogene Mischung von Substanzen bezeichnet, die aus einem oder mehreren Polymeren besteht oder Polymere zu einem wesentlichen Teil enthält.

Der Begriff "Polyurethan" umfasst im vorliegenden Dokument sämtliche Polymere, welche nach dem Diisocyanat-Polyadditions-Verfahren hergestellt werden. Dies schliesst auch solche Polymere ein, die nahezu oder gänzlich frei sind von Urethangruppen, wie Polyether-Polyurethane, Polyester-Polyurethane, Polyether-Polyharnstoffe, Polyharnstoffe, Polyester-Polyharnstoffe, Polyisocyanurate, Polycarbodiimide, usw.

Die Vorsilbe "Poly" in Substanzbezeichnungen wie "Polyol", "Polyisocyanat" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Das Isocyanatgruppen enthaltende Polyurethanpolymer wird hergestellt durch Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Der Überschuss an Polyisocyanat wird so gewählt, dass im resultierenden Polyurethanpolymer nach der Umsetzung aller Hydroxylgruppen des Polyols beispielsweise ein Gehalt an freien Isocyanatgruppen von 0.1 bis 15 Gewichts-%, bevorzugt 0.5 bis 5 Gewichts-%, bezogen auf das gesamte Polyurethanpolymer, verbleibt. Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Als Polyole für die Herstellung eines solchen Isocyanatgruppen enthaltenden Polyurethanpolymers können beispielsweise die folgenden handelsüblichen Polyole oder beliebige Mischungen davon eingesetzt werden:
- Polyoxyalkylenpolyole, auch Polyetherpolyole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxypropylendiole und -triole mit einem Molekulargewicht von 400 bis 8'000 g/mol. Unter "Molekulargewicht" oder "Molgewicht" versteht man im vorliegenden Dokument stets das Molekulargewichtsmittel Mₙ.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Styrol-Acrylnitril-gepfropfte Polyetherpolyole, wie sie beispielsweise von Bayer unter dem Namen Lupranol geliefert werden.
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polyhydroxyterminierte Polybutadienpolyole, wie beispielsweise solche, die durch Polymerisation von 1,3-Butadien und Allylalkohol hergestellt werden.
- Polyhydroxyterminierte Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar^{®} CTBN von Hanse Chemie) hergestellt werden können.

Diese genannten Polyole weisen ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Zusätzlich zu diesen genannten Polyolen können niedrigmolekulare zwei- oder mehrwertige Alkohole wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole und andere höherwertige Alkohole, niedrigmolekulare Alkoxylierungsprodukte der vorgenannten zwei- und mehrwertigen Alkohole sowie Mischungen der vorgenannten Alkohole bei der Herstellung des Polyurethanpolymers mitverwendet werden.

Als Polyisocyanate für die Herstellung eines solchen Isocyanatgruppen enthaltenden Polyurethanpolymers werden handelsübliche Polyisocyanate verwendet. Als Beispiele seien die folgenden, in der Polyurethanchemie bestens bekannten Polyisocyanate erwähnt:
2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate, 1,3- und 1,4-Phenylendiisocyanat, 2,3,5,6-Tetramethyl-1,4-diisocyanatobenzol, 1,6-Hexamethylendiisocyanat (HDI), 2-Methylpenta-methylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und - 1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), m- und p-Xylylendiisocyanat (XDI), 1,3-und 1,4-Tetramethylxylylendiisocyanat (TMXDI), 1,3- und 1,4-Bis-(isocyanatomethyl)-cyclohexan, sowie Oligomere und Polymere der vorgenannten Isocyanate, sowie beliebige Mischungen der vorgenannten Isocyanate. Besonders bevorzugt sind MDI, TDI, HDI und IPDI sowie deren Mischungen. Am meisten bevorzugt sind MDI und TDI sowie deren Mischungen.

In einer bevorzugten Ausführungsform ist das Isocyanatgruppen enthaltende Polyurethanpolymer blockiert. Die Blockierung erfolgt dabei durch die Umsetzung des Isocyanatgruppen enthaltenden Polyurethanpolymers mit einem Blockierungsmittel. Diese Umsetzung erfolgt vorzugsweise dadurch, dass das Isocyanatgruppen enthaltende Polyurethanpolymer im stöchiometrischen Verhältnis, bezogen auf den Gehalt an Isocyanatgruppen, mit dem Blockierungsmittel versetzt und bei einer Temperatur von 20 bis 120 °C solange zur Reaktion gebracht wird, bis annähernd keine freien Isocyanatgruppen mehr nachweisbar sind. Falls gewünscht, kann ein Katalysator mitverwendet werden, beispielsweise eine Zinn- oder eine Bismut-Verbindung. Beispiele für geeignete Blockierungsmittel sind Phenole wie Phenol, Kresol, Xylenol, p-Ethylphenol, o-Isopropylphenol, p-tert-Butylphenol, p-tert-Octylphenol, Nonylphenol, Dodecylphenol, Thymol, p-Naphthol, p-Nitrophenol, p-Chlorophenol, 2-Pyridinol; Phenolgruppen-haltige Kohlenwasserstoff-Harze wie Cumaron-Inden-Harze, Petroleumharze, Terpenharze; Alkohole wie Methanol, Ethanol, Propanol, Isopropanol, Butanol, 2-Butanol, Isobutanol, Ethylenglykol, Ethylenglykol-methylether (Methyl-Cellosolve^{®}), Ethylenglykolbutylether (Butyl-Cellosolve^{®}), Ethylenglykol-phenylether (Phenyl-Cellosolve^{®}), Diethylenglykol-monomethylether (Methyl-Carbitol^{®}), Diethylenglykolmonobutylether (Butyl-Carbitol^{®}), Benzylalkohol, Furfurylalkohol, Cyclohexanol; 1,3-Dicarbonylverbindungen wie Dimethylmalonat, Diethylmalonat, Diethylmethylmalonat, Ethylacetoacetat, 2,4-Pentandion; Mercaptane wie Butylmercaptan, Hexylmercaptan, Dodecylmercaptan, Thiophenol, 2-Mercaptopyridin; Carbonsäureamide wie Acetamid, Acetanilid, Acetanisid, Benzamid; Carbonsäureimide wie Succinimid, Maleimid; Amine wie Diisopropylamin, Dicyclohexylamin, N-tert.Butyl-N-benzylamin, 2,6-Dimethylpiperidin, Diphenylamin, Phenylnaphthylamin, Anilin, 9H-Carbazol; Stickstoff-Heterocyclen wie Imidazol, 2-Methylimidazol, 2-Ethylimidazol, Benzimidazol, Pyrazol, 3,5-Dimethylpyrazol, 1,2,4-Triazol, Benzotriazol; Harnstoffe wie Harnstoff, Thioharnstoff, Imidazolidin-2-on; Aldoxime wie Formaldoxim, Acetaldoxim; Ketoxime wie Methylethylketoxim, Methylisopropylketoxim, Methylisobutylketoxim, Methylamylketoxim, Diisopropylketoxim, Cyclohexanonoxim; Lactame wie ε-Caprolactam, δ-Valerolactam, γ-Butyrolactam, β-Propiolactam, Imine wie Ethylenimin; N-Hydroxysuccinimid; 2-Benzoxazolon; 1,3-Benzoxazin-2,4-dion; Bisulfite wie Natriumbisulfit, Kaliumbisulfit; sowie weitere Blockierungsmittel, wie sie in den beiden Review-Artikeln von D.A. Wicks und Z.W. Wicks, Jr., "Blocked Isocyanates", erschienen in Progress in Organic Coatings 36 (1999), 148-172 und Progress in Organic Coatings 41 (2001), 1-83, genannt sind. Als Blockierungsmittel bevorzugt sind Phenole, Kohlenwasserstoffharze, Alkohole, Oxime, Stickstoff-Heterocyclen, 1,3-Dicarbonylverbindungen, Amine und Lactame. Besonders bevorzugt sind Methylethylketoxim, Methylisobutylketoxim, Pyrazol, 3,5-Dimethylpyrazol, 1,2,4-Triazol, Benzotriazol, Dimethylmalonat, Diethylmalonat, Diisopropylamin, Dicyclohexylamin, N-tert.Butyl-N-benzylamin sowie ε-Caprolactam.

Die Polyurethanzusammensetzung enthält als Härter B einen Härter, der gegenüber Isocyanaten reaktive Gruppen enthält und der in blockierter Form vorliegt, wobei die Blockierung chemischer oder physikalischer Natur sein kann. Beispiele für geeignete chemisch blockierte Härter sind über eine Komplexbindung an Metalle gebundene Polyamine, im besonderen Komplexverbindungen von Methylendianilin (MDA) und Natriumchlorid. Solche Komplexverbindungen werden üblicherweise mit der Bruttoformel (MDA)₃·NaCl beschrieben. Ein geeigneter Typ ist als Dispersion in Diethylhexylphthalat unter dem Handelsnamen Caytur^{®} 21 von Crompton Chemical erhältlich. Der Komplex zersetzt sich beim Erwärmen auf 80-160 °C mit bei höherer Temperatur zunehmender Geschwindigkeit, wodurch Methylendianilin als aktiven Härter freigesetzt wird. Beispiele für physikalisch blockierte Härter sind mikroverkapselte Härter. Zur Verwendung als Härter in mikroverkapselter Form insbesondere geeignet sind zwei- oder mehrwertige Alkohole wie 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole, niedrigmolekulare Alkoxylierungsprodukte der vorgenannten zwei- und mehrwertigen Alkohole; kurzkettige Polyesterpolyole wie Terephthalsäurebisglykolester; aliphatische, cycloaliphatische und aromatische Aminoalkohole wie Ethanolamin, Propanolamin, Butanolamin, N-Methylethanolamin, Diethanolamin, Triethanolamin; Hydrazide von Dicarbonsäuren; aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-amino-propyl)amin, 1,5-Diamino-2-methylpentan (MPMD), 1,3-Diaminopentan (DAMP), 2,5-Dimethyl-1,6-hexamethylendiamin, Dimerfettsäurediamine; cycloaliphatische Polyamine wie 1,2-, 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 1,4-Diamino-2,2,6-trimethylcyclohexan (TMCDA), 3,9-Bis-(3-aminopropyl)-2,4,8,10-tetraoxa-spiro[5.5]undecan, 1,3- und 1,4-Xylylendiamin; Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine^{®} (hergestellt von Huntsman Chemicals); aromatische Polyamine wie Methylendianilin, Diaminodiphenylether, Diaminodiphenylsulfon, die isomeren Phenylendiamine, Aminodiphenylamin. Bevorzugt sind die genannten aliphatischen, cycloaliphatischen und aromatischen Polyamine. Die Mikroverkapselung dieser Härter kann nach einem der gängigen Verfahren durchgeführt werden, beispielsweise mittels Sprühtrocknung, Grenzflächenpolymerisation, Koazervation, Tauch- oder Zentrifugenverfahren, Wirbelbettverfahren, Vakuum-Verkapselung, elektrostatische Mikroverkapselung. Die so erhaltenen Mikrokapseln haben eine Partikelgrösse von 0.1 bis 100 Mikrometern, bevorzugt 0.3 bis 50 Mikrometern. Die Grösse der Mikrokapseln ist so bemessen, dass sie sich beim Erhitzen einerseits effektiv öffnen, und andererseits nach der Aushärtung eine optimale Homogenität und damit Kohäsionsfestigkeit des Klebstoffs erhalten wird. Sie dürfen weiterhin keinen schädlichen Einfluss auf die Adhäsionseigenschaften des Klebstoffs ausüben. Als Material für die Kapselhülle kommen Polymere in Betracht, die im zu verkapselnden Härter unlöslich sind und einen Schmelzpunkt von 40 bis 200 °C aufweisen. Beispiele für geeignete Polymere sind Kohlenwasserstoff-Wachse, Polyethylenwachse, Wachsester, Polyester, Polyamide, Polyacrylate, Polymethacrylate oder Mischungen mehrerer solcher Polymeren.

In einer bevorzugten Ausführungsform liegen in der Polyurethanzusammensetzung sowohl das Isocyanatgruppen enthaltende Polyurethanpolymer als auch der Härter in blockierter Form vor.

In einer zweiten Ausführungsform ist der einkomponentige Reaktionsklebstoff eine Polyurethanzusammensetzung aus Polyol und einem darin dispergierten blockierten Isocynathärter. Diese ist dadurch gekennzeichnet, dass sie als Polyreaktionen eingehendes Harz **A** ein Polyol oder ein Gemisch von Polyolen enthält und als isocyanatgruppenhaltigen Härter **B** ein enkapsuliertes Isocyanat enthält.

In einer dritten Ausführungsform ist der einkomponentige Reaktionsklebstoff eine Acrylatzusammensetzung. Diese ist dadurch gekennzeichnet, dass sie als Polyreaktionen eingehendes Harz **A** mindestens ein zwei- oder mehrwertiges Acryl- oder Methacrylgruppen enthaltendes Monomer sowie mindestens ein monofunktionelles Acryl- oder Methacrylgruppen enthaltendes Monomer enthält. Beispiele für geeignete zwei- oder mehrwertige Acryl- oder Methacrylgruppen enthaltende Monomere sind Acrylate und Methacrylate von aliphatischen Polyetherpolyurethanen und Polyesterpolyurethanen, Polyethern, Polyestern, Novolaken, zwei- und mehrwertigen aliphatischen, cycloaliphatischen und aromatischen Alkoholen, Glykolen und Phenolen. Beispiele für monofunktionelle Acryl- oder Methacrylgruppen enthaltende Monomere sind Methylacrylat und -methacrylat, Ethylacrylat und -methacrylat, Hexylacrylat und -methacrylat, Dodecylacrylat und -methacrylat, Tetrahydrofurfurylacrylat und - methacrylat, sowie hydroxylgruppenhaltige Acrylate und Methacrylate wie 2-Hydroxyethylacrylat und -methacrylat und 2-Hydroxypropylacrylat und - methacrylat.

Als Härter **B** enthält die Acrylatzusammensetzung einen die Polymerisation der Acrylat- oder Methacrylatmonomere auslösenden thermischen Initiator, der in blockierter Form vorliegt. Beispiele für geeignete thermische Initiatoren sind Diacylperoxide wie Benzoylperoxid, Lauroylperoxid, und Decanoylperoxid; Peroxydicarbonate wie Dipropylperoxydicarbonat; Peroxyoxalate wie Di-tert.butylperoxyoxalat; Hyponitrite wie Di-tert.butylhyponitrit. Bevorzugt ist Benzoylperoxid. Der blockierte thermische Initiator, insbesondere Benzoylperoxid, liegt bevorzugt in mikroverkapselter Form vor. Die Herstellung von mikroverkapselten organischen Peroxiden wird beispielsweise beschrieben in EP 0 730 493 B1.

In einer vierten Ausführungsform ist der einkomponentige Reaktionsklebstoff eine Epoxidzusammensetzung. Diese ist dadurch gekennzeichnet, dass sie als Polyreaktionen eingehendes Harz **A** mindestens ein Polyepoxid enthält. Beispiele für geeignete Polyepoxide sind Diglycidyl- oder Polyglycidylether von mehrwertigen aliphatischen, cycloaliphatischen oder aromatischen Alkoholen, Polyalkylenglykolen, Phenolen wie Bisphenol-A oder von Kondensationsprodukten von Phenolen mit Formaldehyd, die unter sauren Bedingungen erhalten werden, wie Phenolnovolake und Kresolnovolake; Polyglycidylester von mehrwertigen Carbonsäuren; sowie N-Glycidyl-Derivate von Aminen, Amiden und heterocyclischen Stickstoffbasen. Glycidylisierte Novolake, Hydantoine, Aminophenole, Bisphenole oder aromatische Diamine sind bevorzugt. Weiterhin sind Addukte von flüssigen Epoxidharzen mit reaktiven Flüssigkautschuken enthalten.

Als Härter **B** enthält die Epoxidzusammensetzung einen Härter, der gegenüber Epoxiden reaktive Gruppen enthält und der in blockierter Form oder kristallin als in Epoxiden schwerlösliche Verbindung vorliegt. Beispiele für geeignete Härter sind Amine wie aliphatische, cycloaliphatische, aromatische oder araliphatische, bevorzugt primäre oder sekundäre, Amine und Polyamine; Addukte und Polyalkoxylierungsprodukte von Polyaminen; aminterminierte Polyalkylenglykole; Addukte von Monophenolen oder Polyphenolen mit Polyamiden; Polyamide, besonders solche, die sich ableiten von aliphatischen Polyaminen und dimerisierten oder trimerisierten Fettsäuren; Polysulfide; Anilinformaldehyde; mehrwertige Phenole; mehrwertige Carbonsäuren und ihre Anhydride. Bevorzugte Härter sind sog. latente Härte wie Dicyandiamide, Urone, hergestellt durch Blockierung von Isocyanaten mit Aminen, Diurone, Imidazole und Kombinationen dieser Verbindungen mit Dicyandiamiden.

Der einkomponentige Reaktionsklebstoff enthält weiterhin mindestens ein Additiv **D.** Als geeignete Additive kommen beispielsweise die folgenden Hilfs- und Zusatzmittel in Betracht:
Weichmacher, beispielsweise Ester organischer Carbonsäuren oder deren Anhydride, Phthalate, beispielsweise Dioctylphthalat oder Diisodecylphthalat, Adipate, zum Beispiel Dioctyladipat, Sebacate, organische Phosphor- und Sulfonsäureester, Polybutene und andere, mit Isocyanaten nicht reagierende Verbindungen; Reaktivverdünner und Vernetzer, beispielsweise mehrwertige Alkohole, Polyamine, Polyaldimine, Polyketimine oder aliphatische Isocyanate, beispielsweise 1,6-Hexamethylendiisocyanat, 2,2,4- und 2,4,4-Trimethyl-1,6-hexamethylendiisocyanat, 1,12-Dodecamethylendiisocyanat, Cyclohexan-1,3-und 1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat, 1,3- und 1,4-Tetramethylxylylendiisocyanat, Isocyanurate dieser Isocyanate, Oligomere und Polymere dieser Isocyanate sowie ihre Addukte mit Polyolen; anorganische und organische Füllstoffe, zum Beispiel gemahlene oder gefällte Calciumcarbonate, welche gegebenenfalls mit Stearaten beschichtet sind, insbesondere feinteiliges beschichtetes Calciumcarbonat, Russe, Kaoline, Aluminiumoxide, Kieselsäuren und PVC-Pulver oder Hohlkugeln; Fasern, beispielsweise aus Polyethylen; Pigmente; Katalysatoren für die Reaktion der Isocyanatgruppen, beispielsweise Organozinnverbindungen wie Dibutylzinndiacetat, Dibutylzinndilaurat, Dioctylzinndicarboxylat, Dibutylzinndichlorid, Dibutylzinndiacetylacetonat, Alkylzinnthioester, Bismut-organische Verbindungen oder Bismut-Komplexe, tertiäre Amine wie beispielsweise 2,2'-Dimorpholinodiethylether; Polyaldimine, Polyketimine oder Polyoxazolidine; Katalysatoren für die Hydrolyse von Aldimin-, Ketimin- und Oxazolidingruppen, beispielsweise organische Carbonsäuren wie Benzoesäure oder Salicylsäure, organische Carbonsäureanhydride wie Phthalsäureanhydrid oder Hexahydrophthalsäureanhydrid, Silylester organischer Carbonsäuren, organische Sulfonsäuren wie p-Toluolsulfonsäure oder 4-Dodecylbenzolsulfonsäure, oder andere organische oder anorganische Säuren, oder Mischungen der vorgenannten Säuren; Katalysatoren für die Reaktion der Epoxidgruppen, wie beispielsweise Salicylsäure, Dicyandiamid, tertiäre Amine oder quaternäre Ammoniumverbindungen, Mannich-Basen, Imidazole sowie Bortrifluorid oder seine Komplexe mit organischen Verbindungen wie Ethern und Amine, gegebenenfalls in blockierter Form; Katalysatoren zur Beschleunigung der Acrylatpolymerisation, beispielsweise tertiäre Amine wie N,N-Dimethylanilin, N,N-Dimethyl-p-toluidin, N,N-Dimethylbenzylamin und N-Alkylmorpholin, Thioharnstoffe wie 1,3-Diethylthioharnstoff, oder Komplexe oder Salze von Nickel, Kobalt und Kupfer, sowie Kombinationen dieser Katalysatoren; Rheologie-Modifizierer wie beispielsweise Verdickungs- oder Thixotropiermittel, zum Beispiel Harnstoffverbindungen, Polyamidwachse, Bentonite oder pyrogene Kieselsäuren; Haftvermittler, insbesondere Silane wie Alkylsilane, Epoxyalkylsilane, Vinylsilane, Aldiminoalkylsilane, Methacryloxyalkylsilane und Isocyanatoalkylsilane, sowie oligomere Formen dieser Silane; Wachse; Trocknungsmittel, beispielsweise p-Tosylisocyanat und andere reaktive Isocyanate, Orthoameisensäureester, Calciumoxid oder Molekularsiebe; Stabilisatoren gegen Wärme, Licht- und UV-Strahlung; flammhemmende Substanzen; oberflächenaktive Substanzen, beispielsweise Netzmittel, Verlaufsmittel, Entlüftungsmittel oder Entschäumer; Fungizide oder das Pilzwachstum hemmende Substanzen; sowie weitere, in Reaktionsklebstoffen üblicherweise eingesetzte Substanzen. Dem Fachmann ist klar, welche Hilfs- und Zusatzstoffe für die jeweilige Ausführungsform des Reaktionsklebstoffs geeignet sind.

Solche einkomponentigen Klebstoffe sind einfach in der Anwendung. Aufgrund der Blockierung von Harz und/oder Härter sind sie äusserst lagerstabil. In den bevorzugten Ausführungsformen sind sie aufgrund der Blockierung von Harz **A** und/oder Härter **B** nicht anfällig auf Feuchtigkeit. Sie weisen gute mechanischen Festigkeiten auf, wobei diese Eigenschaften in einem weiten Bereich einstellbar sind.

### Beispiele für reaktive Klebstoffe: Zweikomponentige Systeme

Bei zweikomponentigen Systemen muss die eine Komponente von der anderen getrennt aufbewahrt werden und bei der Applikation gezielt freigesetzt werden. Der Reaktionsklebstoff besteht dabei aus einem Harz und einem Härter.

Für eine gute Durchmischung der Komponenten ist eine Viskosität < 7000 mPa·s notwendig. Die Viskosität kann durch eine Temperaturerhöhung eingestellt werden. Diese Temperaturerhöhung kann beispielsweise durch Eintrag von Mikrowellen oder Induktion erfolgen, die Energieabsorption kann durch absorbierende Partikel in der Klebstoffformulierung, wie elektrisch leitende Partikel oder nano- bzw mikroskalige Ferrite, verbessert werden, wie es auch oben bei den Beispielen für die einkomponentigen Systeme beschrieben ist.

Die als getrennte Komponenten vorliegenden lagerstabilen Reaktionsklebstoffe können beispielsweise basieren auf:

### 1) Epoxidharzen und Härtern

Als Epoxidharz können hier beliebige Epoxidharze verwendet werden; bevorzugt enthält das Epoxidharz mindestens 2 Epoxidgruppen im Molekül. Geeignete Epoxidharze sind insbesondere solche mit mehr als einer Epoxidgruppe, β-Methylglycidylgruppe oder 2,3-Epoxycyclopentylgruppe, die an ein Heteroatom, wie z.B. Schwefel, bevorzugt aber an Sauerstoff oder Stickstoff, gebunden sind, insbesondere Bis(2,3 epoxycyclopentyl)ether, Diglycidyl- oder Polyglycidylether von mehrwertigen aliphatischen oder aromatischen Alkoholen wie Butan-1,4-diol, oder Polyalkylenglykolen wie Polypropylenglykol; Diglycidyl-oder Polyglycidylether von cycloaliphatischen Polyolen wie 2,2-Bis(4-hydroxy-cyclohexyl)propan; Diglycidyl- oder Polyglycidylether von mehrwertigen Phenolen wie Resorcinol, Bis(p-hydroxyphenyl)methan, 2,2-Bis(p-hydroxyphenyl)propan (Bisphenol-A), 2,2-Bis(4'-hydroxy-3',5'-dibromophenyl)propan und 1,1,2,2-Tetrakis(p-hydroxyphenyl)ethan, oder von Kondensationsprodukten von Phenolen mit Formaldehyd, die unter sauren Bedingungen erhalten werden, wie Phenolnovolake und Kresolnovolake, sowie die Di(β-methylglycidyl)- oder Poly(β-methylglycidyl)ether der erwähnten mehrwertigen Alkohole oder Phenole. Ausserdem geeignet sind Polyglycidylester von mehrwertigen Carbonsäuren wie Phthalsäure, Terephthalsäure, Tetrahydrophthalsäure und Hexahydrophthalsäure, die N-Glycidyl-Derivate von Aminen, Amiden und heterocyclischen Stickstoffbasen wie N,N-Diglycidylanilin, N,N-Diglycidyltoluidin, N,N,O-Triglycidyl-p-aminophenol, N,N,N',N'-Tetraglycidyl-bis(p-aminophenyl)methan und Triglycidylisocyanurat.

Glycidylisierte Novolake, Hydantoine, Aminophenole, Bisphenole oder aromatische Diamine sind eine bevorzugte Gruppe von Epoxidharzen. Bevorzugte Zusammensetzungen enthalten als Harz auch einen glycidylisierten Kresolnovolak, Bisphenol-A-diglycidylether oder einen Bisphenol-A-diglycidylether, der beispielsweise mit Bisphenol-A, dimeren Fettsäuren oder einem Gemisch davon vorverlängert ist, sowie deren Mischungen mit aliphatischen Diglycidylethern.

Mögliche Epoxidhärter sind saure oder basische Verbindungen. Beispiele geeigneter Härter sind Amine wie aliphatische, cycloaliphatische, aromatische oder araliphatische, bevorzugt primäre oder sekundäre, Amine wie z.B. Ethylendiamin, Hexamethylendiamin, Trimethylhexamethylendiamin, Diethylentriamin, Triethylentetramin, Tetraethylenpentamin, N,N-Dimethylpropylen-1,3-diamin, N,N-Diethylpropylen-1,3-diamin, 2,2-Bis(4'-aminocyclohexyl)propan, 3,5,5-Trimethyl-3-(aminomethyl)cyclohexylamin (Isophorondiamin), m-Phenylendiamin, p-Phenylendiamin, Bis(4-aminophenyl)methan, Bis(4-aminophenyl)sulfon und m-Xylylendiamin; Addukte von Polyalkylenpolyaminen, z.B. Diethylentriamin oder Triethylentetramin mit Acrylnitril oder Monoepoxiden wie z.B. Ethylenoxid oder Propylenoxid; aminterminierte Polyalkylenglykole, z.B. erhältlich unter dem Namen JEFFAMINE^{®} (Huntsman); Addukte von Polyaminen, wie Diethylentriamin oder Triethylentetramin, mit Polyepoxiden, wie Bisphenol-A diglycidylether, hergestellt mit einem Ueberschuss an diesen Polyaminen; Addukte von Monophenolen oder Polyphenolen mit Polyamiden; Polyamide, besonders solche, die sich ableiten von aliphatischen Polyaminen wie z.B. Diethylentriamin oder Triethylentetramin, und dimerisierten oder trimerisierten Fettsäuren (z.B. Versamide^{®} aus dimerisierter Linolsäure); Polysulfide, z.B. erhältlich unter den Namen THIOKOL^{®}; Anilinformaldehyde; mehrwertige Phenole, z.B. Resorcinol, 2,2-bis(4-hydroxyphenyl)propan oder Phenolformaldehydharze (Novolake); mehrwertige Carbonsäuren und ihre Anhydride, z.B. Phthalsäureanhydrid, Tetrahydrophthalsäureanhydrid, Hexahydrophthalsäureanhydrid, 4-Methylhexahydrophthalsäureanhydrid, 3,6-Endomethylentetrahydrophthalsäureanhydrid, 4-Methyl-3,6-endomethylen-4-tetrahydrophthalsäureanhydrid (Methylnadic Anhydrid), Bernsteinsäureanhydrid, Adipinsäureanhydrid, Trimethyladipinsäureanhydrid, Sebacinsäureanhydrid, Maleinsäureanhydrid, Dodecylbernsteinsäureanhydrid, Pyromellitsäuredianhydrid, Trimellitsäureanhydrid, Benzophenontetracarbonsäuredianhydrid oder Mischungen von Anhydriden, Amine und Polyaminoamide sind bevorzugte Härter.

Die Zusammensetzung kann auch Beschleuniger oder Härtungskatalysatoren enthalten. Beispiele sind: tertiäre Amine oder quaternäre Ammoniumverbindungen, Mannich-Basen wie 2,4,6-Tris(dimethylaminomethyl)phenol, Benzyldimethylamin. 2-Ethyl-4-methylimidazol, Monophenole oder Polyphenole wie Phenol und Bisphenol-A, Salicylsäure, Dicyandiamid, Bortrifluorid und seine Komplexe mit organischen Verbindungen wie Ethern und Aminen, z.B. BF₃-Monoethylamin und BF₃-Acetoacetanilid. Phosphorsäure sowie Triphenylphosphin. Tertiäre Amine, Mannichbasen und Imidazole sind bevorzugt.

Weiterhin kann das Harz Zähigkeitsverbesserer, wie carboxylterminierte Polybutadiene, wie carboxylterminierte Polybutadien-acrylnitrilcopolymere, reaktive Flüssigkautschuke, hergestellt durch Umsetzung von Polyetherdiolisocyanaten mit Diphenolen oder Hydroxyepoxydverbindungen oder Core Shell Partikel, sowie Thixotropiermittel enthalten, z.B. auf Basis von einem Harnstoffderivat in einem nicht-diffundierenden Trägermaterial. Vorteilhaft enthält dieses Thixotropiermittel ein blockiertes Polyurethanpräpolymer als Trägermaterial. Die Herstellung von solchen Harnstoffderivaten und Trägermaterialien sind im Detail in EP 1 152 019 A1 beschrieben.

### 2) Polyisocyanaten und Polyol- oder Polyaminhärtern

Geeignete Systeme sind beispielsweise:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Speziell geeignet sind Polyoxypropylendiole und -triole mit einem Ungesättigtheitsgrad tiefer als 0.02 mEq/g und mit einem Molekulargewicht im Bereich von 1000 - 30'000 g/mol, Polyoxybutylendiole und -triole, Polyoxypropylendiole und -triole mit einem Molekulargewicht von 400 - 8'000 g/mol, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Polyhydroxyterminierte Polybutadienpolyole, wie beispielsweise solche, die durch Polymerisation von 1,3-Butadien und Allylalkohol hergestellt werden;
- Styrol-Acrylnitril gepfropfte Polyetherpolyole, wie sie beispielsweise von Bayer unter dem Namen Lupranol geliefert werden;
- Polyhydroxyterminierte Acrylonitril/Polybutadien-Copolymere, wie sie beispielsweise aus Carboxylterminierten Acrylonitril/Polybutadien-Copolymere (kommerziell erhältlich unter dem Namen Hycar^{®} CTBN von Hanse Chemie) und Epoxiden oder aus Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton; - Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Isocyanat-reaktiven Polymere di- oder höherfunktioneller Polyole mit OH-Equivalenzgewichten von 600 bis 6000 g/OH-Equivalent, insbesondere von 600 bis 4000 g/OH-Equivalent, vorzugsweise 700 bis 2200 g/OH-Equivalent. Weiterhin vorteilhaft sind die Polyole ausgewählt aus der Gruppe bestehend aus Polyethylenglykolen, Polypropylenglykolen, Polyethylenglykol-Polypropylenglykol-Blockcopolymeren, Polybutylenglykolen, hydroxylterminierten Polybutadienen, hydroxylterminierten Polybutadien-co-Acrylnitrilen, hydroxylterminierten synthetischen Kautschuken und Gemischen dieser genannten Polyole.

Im Weiteren können als Isocyanat-reaktive Polymere auch di- oder höherfunktionelle aminterminierte Polyethylenether, Polypropylenether, Polybutylenether, Polybutadiene, Polybutadien/Acrylnitrile (z.B. Hycar^{®} CTBN von Hanse Chemie), sowie weiteren aminterminierte synthetische Kautschuke oder Gemische der genannten Komponenten verwendet werden.

Es ist weiterhin möglich, dass Isocyanat-reaktive Polymere auch kettenverlängert sein können, wie sie gemäss dem Fachmann in bekannter Art und Weise aus der Reaktion von Polyaminen, Polyolen und Polyisocyanaten, insbesondere aus Diaminen, Diolen und Diisocyanaten, hergestellt werden können.

Als Isocyanat-reaktive Polymere bevorzugt sind Polyole mit Molekulargewichten zwischen 600 und 6000 g/mol, ausgewählt aus der Gruppe bestehend aus Polyethylenglykolen, Polypropylenglykolen, Polyethylenglykol-Polypropylenglykol-Blockcopolymeren, Polybutylenglykolen, hydroxylterminierte Polybutadiene, hydroxylterminierte Polybutadien-AcrylnitrilCopolymere sowie deren Gemische.

Als Isocyanat-reaktive Polymere sind insbesondere bevorzugt α,ω,-Polyalkylenglykole mit C₂-C₆-Alkylengruppen oder mit gemischten C₂-C₆- Alkylengruppen, die mit Amino-, Thiol- oder, bevorzugt, Hydroxylgruppen terminiert sind. Besonders bevorzugt sind Polypropylenglykol und Polybutylenglykol.

Als Polyisocyanate geeignet sind Diisocyanate, Triisocyanate oder Tetraisocyanate, insbesondere Di- oder Triisocyanate. Bevorzugt sind Diisocyanate. Als Diisocyanate geeignet sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)- bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylendiisocyanat (TMXDI), sowie deren Dimere. Bevorzugt sind HDI, IPDI, TMDI, MDI und TDI.

Geeignete Triisocyanate sind insbesondere Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Weiterhin geeignet sind an der Oberfläche deaktivierte Partikel von festen Polyisocyanaten, wie sie in R. Blum und H. Schupp, Progress in Organic Coatings (1990) S. 275-288 beschrieben sind.

### 3) Acrylaten und Methacrylaten und mikroverkapselten radikalischen Initiatoren

Geeignete Systeme sind beispielsweise in der Anmeldung WO 02/070620 A1 sowie in der darin genannten Literatur beschrieben. Sie bestehen aus Methacrylsäureestern wie Methylmethacrylat und Tetrahydrofurfurylmethacrylat sowie aliphatischen Polyurethanacrylaten, mit Acrylsäure umgesetzten Elastomeren wie Polybutadien-acrylniril-copolymeren (Handelsname HYCAR^{®} VTBNX) oder Core-shell Polymeren. Weitere geeignete Systeme, die im wesentlichen aus Mischungen von Methacrylaten mit Elastomeren bestehen, sind beispielsweise in US 3,890,407, US 4,106,971 und US 4,263,419 beschrieben. Als Initiatoren kommen besonders organische Peroxide in Frage, besonders Benzoylperoxid in Kombination mit Katalysatoren wie tertiären Aminen und/oder Komplexen oder Salzen von Übergangsmetallen. Beispiele tertiärer Amine sind N,N-Dimethylbenzylamin und N-Alkylmorpholin. Beispiele für Komplexe oder Salze von Übergangsmetallen sind Komplexe oder Salze von Nickel, Kobalt und Kupfer.

Die Herstellung von mikroverkapselten radikalischen Initiatoren wie Peroxide sind beispielsweise in EP 0 730 493 B1 beschrieben.

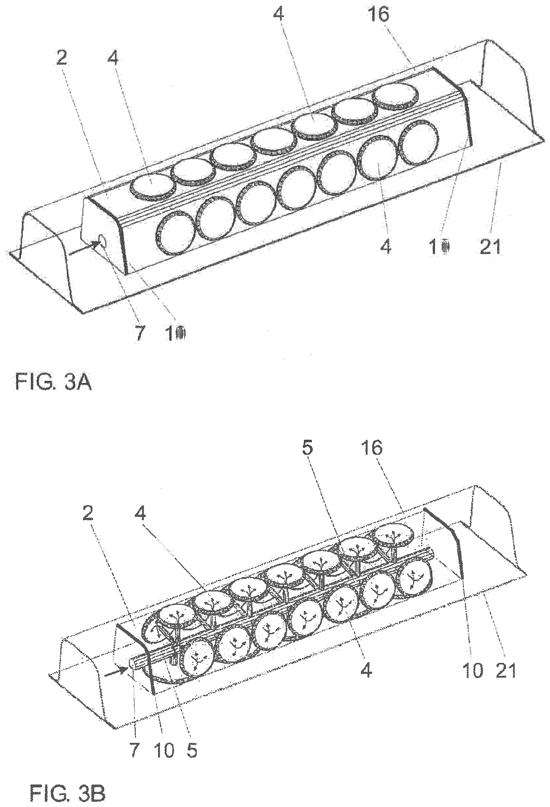

In den Figuren 3A und 3B ist ein Trägerteil 2 in einer Säule 21 einer Karosserie angeordnet. Das Trägerteil weist Kanäle 5 auf, die über eine Einfüllöffnung 7 mit Klebstoff 4 befüllt werden können. Die Kanäle 5 sind über Öffnungen 8 an der Oberfläche des Trägerteils nach aussen gegen die Karosserie offen, so dass in diesen Bereichen der Klebstoff 4 aus dem Trägerteil 2 austritt. Der Klebstoff füllt in diesen Bereichen den Hohlraum 16 zwischen Trägerteil und Karosserie aus und verbindet so das Trägerteil mit der Karosserie. In den Figuren ist der Klebstoff nur in der Anfangsphase beim Austritt aus den Öffnungen 8 dargestellt, wird mehr Klebstoff eingebracht, verbindet sich der Klebstoff zu einer homogenen Fläche. Im Endbereich des Trägerteiles 2 kann eine Dichtung 10 angeordnet werden. Diese Dichtung kann das Trägerteil selbst sein, indem es in diesem Bereich spezifische ausgeformt ist, so dass praktisch kein Abstand zur Karosserie besteht, es kann eine Dichtung aus Kunststoff wie sie üblicherweise zur Abdichtung verwendet wird, beispielsweise ein elastisches Material, ein Streifen eines schäumbaren Materials, usw. verwendet werden. Dadurch können auch Klebstoffe mit einer niedrigen Viskosität zur Verklebung des Trägerteiles in der Karosserie verwendet werden. Als schäumbare Materialien können diejenigen, welche bei Figur 1 beschrieben werden, verwendet werden.

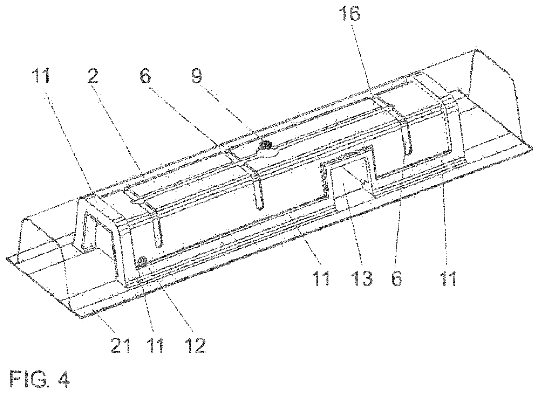

In der Figur 4 ist ein weiteres Trägerteil 2 dargestellt. In dieser Ausführungsform weist das Trägerteil Kanäle 6 auf, welche auf oder im Bereich der Oberfläche des Trägerteiles angeordnet sind. Diese können unterschiedliche Abstände zur Karosserie aufweisen. Über eine Einfüllöffnung 9, welche hier in der Karosserie im Bereich der Kanäle des Trägerteiles 2 angeordnet ist, kann Klebstoff 4 in den Hohlraum 16 zwischen Karosserie und Trägerteil eingefüllt werden. Dieser verteilt sich im Bereich der Kanäle 6 und in den Bereichen, welche von der Karosserie beabstandet sind. Im Endbereich des Trägerteiles 2 kann auch hier eine Dichtung 11 angeordnet werden. Diese Dichtung kann das Trägerteil selbst sein, indem es in diesem Bereich spezifische ausgeformt ist, so dass praktisch kein Abstand zur Karosserie besteht, es kann eine Dichtung aus Kunststoff wie sie üblicherweise zur Abdichtung verwendet wird, beispielsweise ein elastisches Material, ein Streifen eines schäumbaren Materials, ein kittförmiges Material, usw. verwendet werden.

Als kittförmige Materialien können Materialien wie vorgängig für den Reaktionsklebstoff beschrieben verwendet werden, jedoch auch solche welche nicht aushärten. Das kittförmige Material wird vorzugsweise auf der Basis von Polyurethan, Epoxid, Epoxid-Polyurethan-Hybrid, synthetischem Kautschuk, PVC, usw. hergestellt, und so formuliert, dass es eine gute Haftung auf Kunststoffoberflächen sowie Metalloberflächen aufweist, insbesondere auf Stahl-, Aluminiumoberflächen, welche zudem oberflächenbehandelt sein können. Vorzugsweise hat das kittförmige Material eine gute Haftung auf geöltem Stahl um Korrosion im Bereich zwischen Stahl und Dichtung zu verhindern. Vorzugsweise wird jedoch als kittförmiges Material ein Klebstoff wie vorgängig für den Reaktionsklebstoff beschrieben verwendet. Das Material kann zudem eine geringe Expansionsfähigkeit von beispielsweise 10 - 100%, vorzugsweise 10 - 50%, aufweisen, um eine korrekte Verpressung des Stranges und Abdichtung zu garantieren. Es können auch Kombinationen von vorgängig beschrieben schäumbaren Materialien und kittförmigen Materialien verwendet werden.

Das Material kann von Hand oder automatisiert mittels eines Roboters als kontinuierlicher Strang aufgetragen werden. Vorzugsweise wird der Strang beim Zusammenbau der Karosserie auf das Trägerteil aufgetragen, kurz bevor der Hohlraum geschlossen und wird und die Teile verschweisst werden. Das kittförmige Material kann aber auch auf die Karosserie, d.h. z.B. auf das Stahlblech aufgetragen werden und dann erst das Trägerteil eingesetzt werden. Beim Zusammenfügen der Karosserieteile wird der Strang zwischen Trägerteil und Karosserie verpresst und so die Dichtung hergestellt. Das kittförmige Material kann dann in den folgenden Prozessschritten wie nachfolgend beschrieben aushärten. Die Dichtung wird jedoch auch ohne aushärten des kittförmigen Materials erzielt, so dass der Klebstoff auch vor der Beschichtung der Karosserie in den Hohlraum zwischen Karosserie und Trägerteil eingebracht werden kann, und der Klebstoff im Backprozess für die Beschichtung ausgehärtet wird. Das kittförmige Material hat vorzugsweise eine niedrige bis mittlere Viskosität von 100 - 1'500 Pas bei einer Temperatur von 40 - 60°C um die Verarbeitung zu erleichtern und die korrekte Verpressung beim Zusammenbau der Karosserie und des Trägerteiles zu gewährleisten. Bei Raumtemperatur im Bereich von 10 - 30°C sollte die Viskosität vorzugsweise mittel bis hoch sein und in einem Bereich von 500 - 5'000 Pas liegen. Dies um eine korrekte Abdichtung zu erzielen und zu gewährleisten, dass eingespritzter Klebstoff nicht durch die Dichtung austritt oder der Klebstoff bei der Beschichtung der Karosserie nicht ausgewaschen wird. Im Backprozess für die Beschichtung der Karosserie sollte das kittförmige Material seine Eigenschaften beibehalten.

Als schäumbare Materialien können diejenigen, welche bei Figur 1 beschrieben werden, verwendet werden. In der Figur dargestellt ist ein schäumbares Material als Dichtung 11. Dieses schäumt im Backprozess nach Beschichtung der Karosserie auf und dichtet den durch die Kanäle 6 definierten Innenraum zwischen Trägerteil und Karosserie ab. Dadurch können auch Klebstoffe mit einer niedrigen Viskosität zur Verklebung des Trägerteiles in der Karosserie verwendet werden. In der Karosserie kann eine Austrittsöffnung 12 angeordnet werden. Diese hilft auf eine einfache Art festzustellen, wann genügend Klebstoff in den Zwischenraum eingebracht wurde, indem beobachtet wird, wann Klebstoff aus der Öffnung 12 austritt. Diese Öffnung 12 wird deshalb im entferntesten Bereich angeordnet, welcher zuletzt mit Klebstoff gefüllt wird.

Im Trägerteil 2 können auch Hohlräume 13 oder Durchführungen, usw. angeordnet werden. Diese Bereiche werden ebenfalls mittels der Dichtung 11 abgedichtet, so dass kein Klebstoff in diesen Bereichen austreten kann. Ebenfalls können gewisse Bereiche des Trägerteiles so mit einer Dichtung versehen werden, dass in diesen Bereichen kein Klebstoff vorhanden ist. Dadurch können Bereiche erzeugt werden, in denen keine Verbindung zwischen Trägerteil und Karosserie besteht, so dass dort keine Verstärkung erfolgt.

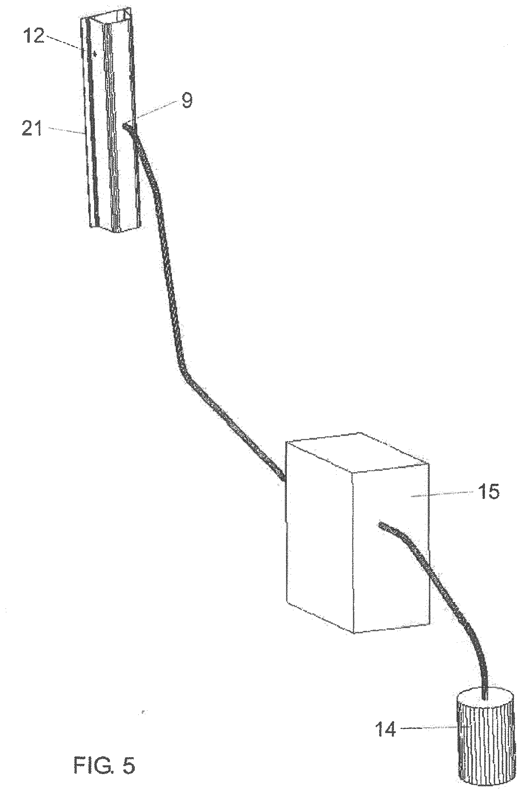

In Figur 5 wird der Klebstoff-Füllprozess schematisch dargestellt. Der Klebstoff wird aus einem Klebstoffbehälter 14 mittels einer Pumpe 15 und die Einfüllöffnung 9 in den Zwischenraum 16 zwischen Trägerteil und Karosserie eingebracht.

Das Verfahren zum Einbau des Verstärkungselements läuft dabei gemäss Stand der Technik typischerweise wie folgt ab. Das Trägerteil wird zum Herstellungsort der Karosserie geliefert. Das Trägerteil wird in den Hohlraum der zu verstärken ist eingelegt oder eingeschoben, sei dies von Hand oder mittels eines Roboters. Das Trägerteil wird im Hohlraum fixiert, dies kann beliebig erfolgen, beispielsweise mittels am Trägerteil angebrachten Halteelementen, Haltelementen an der Karosserie, Klebstoff, usw. Der Hohlraum wird allenfalls verschlossen und die Karosserie verschweisst oder verklebt oder beides. Die Karosserie geht in ein Tauchbad und wird beschichtet. Danach erfolgt ein Backprozess für diese Beschichtungen, allenfalls am Trägerteil angeordnete schäumbare Dichtungen schäumen bei diesem Prozessschritt auf. Danach wird wie vorgängig beschrieben der Klebstoff in den Hohlraum zwischen Karosserie und Trägerteil eingebracht. Dies erfolgt beispielsweise über eine Öffnung 9 in der Karosserie, direkt über eine Öffnung 7, allenfalls über ein in der Karosserie eingelegten Schlauch welcher mit der Öffnung 7 verbunden ist. Die korrekte Füllung mit Klebstoff wird über eine Austrittsöffnung 12, und / oder über den Fülldruck, und / oder über die Füllmenge kontrolliert. Nachdem eine bestimmte Füllmenge an Klebstoff eingebracht wurde, kann ein anderes Material, beispielsweise Luft oder ein billigeres Material als der Klebstoff, in das Füllsystem eingebracht werden, um den in den Kanälen verbliebenen Klebstoff in den Zwischenraum 16 zwischen Trägerteil und Karosserie zu pressen. Dadurch werden die Kanäle vom Klebstoff befreit, um einerseits Klebstoff einzusparen, und andererseits eine nachträgliche Befüllung zu ermöglichen. Je nach Auslegung des Trägerteiles, respektive der Kanäle, kann der Klebstofffluss so eingestellt werden, dass lokal mehr Klebstoff und so eine bessere Verstärkung erfolgt, je nachdem wo dies nötig ist.

Der Klebstoff wird erfindungsgemäss vor der Beschichtung der Karosserie eingebracht werden. Dadurch kann die Haftung zwischen Trägerteil und Karosserie verbessert werden, da dann nicht auf die Beschichtung verklebt wird, sondern direkt auf die Karosserie. Das Trägerteil muss dann aber zusätzlich Abflusskanäle aufweisen, damit im Beschichtungsprozess das Beschichtungsmaterial durch das Trägerteil hindurchfliessen kann. Diese Abflusskanäle können unabhängig von den Kanälen zum Einbringen des Klebstoffes sein.

Selbstverständlich ist die Erfindung nicht auf das gezeigte und beschriebene Ausführungsbeispiel beschränkt. Alle Hohlraumstrukturen, d.h. alle Bauelemente mit Hohlräumen sind mit den vorbeschriebenen Systemen verstärkbar.

### Bezugszeichenliste

- 1: Verstärkungselement
- 2: Trägerteil
- 3: Abstand
- 4: Klebstoff
- 5: Kanal
- 6: Kanal
- 7: Einfüllöffnung
- 8: Austrittsöffnung
- 9: Einfüllöffnung
- 10: Dichtung
- 11: Dichtung
- 12: Austrittsöffnung
- 13: Hohlraum / Durchtritt
- 14: Klebstoffbehälter
- 15: Pumpe
- 16: Hohlraum / Zwischenraum
- 20: Verstärkungselement
- 21: Fahrzeugstruktur / Karosserie
- 22: Trägerteil
- 23: schäumbares Material
- 24: Dicke ungeschäumt
- 25: Abstand zu Karosserie
- 26: Dicke geschäumt

## Patentansprüche

1. Verfahren zur Verstärkung eines Hohlraumes (21) eines Bauelementes, wobei im Bauelement zur Verstärkung ein Trägerelement (2) mit dem Bauelement verbunden ist,
**dadurch gekennzeichnet,**
**dass** das Trägerelement (1) im Bauelement angeordnet wird, dass das Trägerelement (1) Kanäle (5, 6) aufweist und Klebstoff mittels diesen Kanälen (5, 6) in den Hohlraum (16) zwischen dem Trägerelement und dem Bauelement eingebracht wird, nachdem das Trägerelement (1) im

2. Verfahren nach Anspruch 1,
**dadurch gekennzeichnet,**
**dass** der Füllgrad des Hohlraums zwischen dem Trägerelement und dem Bauelement mit Klebstoff mittels einer speziellen Öffnung und / oder des Fülldrucks des Klebstoffes und / oder der Füllmenge des Klebstoffes überwacht wird.

3. Verfahren nach Anspruch 1 oder 2,
**dadurch gekennzeichnet,**
**dass** zumindest teilweise in den Kanälen angeordneter Klebstoff mittels Luft oder eines anderen Materials herausgedrückt wird.

## Claims

1. A method of reinforcing a cavity (21) of a structural element, a support element (2) being connected to the structural element in the structural element for reinforcement purposes, **characterized**
**in that** the support element (1) is disposed in the structural element, in that the support element (1) has channels (5, 6) and in that adhesive is introduced into the cavity (16) between the support element and the structural element by means of these channels (5, 6) after the support element (1) has been disposed in the structural element, and in that the adhesive is introduced before coating of the structural element.

2. The method of claim 1, **characterized in that** the fill level of the cavity between the support element and the structural element with adhesive is monitored by means of a special opening and/or by means of the fill pressure of the adhesive and/or by means of the fill volume of the adhesive.

3. The method of claim 1 or 2, **characterized in that** adhesive disposed at least partly in the channels is expressed by means of air or by means of another material.

## Revendications

1. Procédé de renforcement d'une cavité (21) d'un élément de construction, dans lequel un élément de support (2) est assemblé à l'élément de construction dans l'élément de construction en vue du renforcement, **caractérisé en ce que** l'on dispose l'élément de support (1) dans l'élément de construction, **en ce que** l'élément de support (1) présente des canaux (5, 6), et **en ce que** l'on introduit de la colle au moyen de ces canaux (5, 6) dans la cavité (16) entre l'élément de support et l'élément de construction, après que l'élément de support (1) ait été disposé dans l'élément de construction, et **en ce que** l'on introduit la colle avant un revêtement de l'élément de construction.

2. Procédé selon la revendication 1, **caractérisé en ce que** l'on surveille le degré de remplissage de la cavité entre l'élément de support et l'élément de construction avec de la colle au moyen d'une ouverture spéciale et/ou au moyen de la pression de remplissage de la colle et/ou de la quantité de remplissage de la colle.

3. Procédé selon la revendication 1 ou 2, **caractérisé en ce que** l'on refoule au moins en partie la colle disposée dans les canaux au moyen d'air ou d'un autre matériau.
